# EUROPÄISCHE PATENTSCHRIFT

(11) **EP 2 607 010 B1**
(45) Veröffentlichungstag und Bekanntmachung des Hinweises auf die Patenterteilung: **15.04.2015**
(21) Anmeldenummer: 11306761.5
(22) Anmeldetag: 23.12.2011
(51) Int. Cl.: B23K 11/00, B23K 11/11, B23K 31/02, H01R 4/20, H01R 13/115, H01R 43/02

(54) **Verfahren zum Verschweißen eines elektrischen Leiters mit einem Kontaktelement**
Method of welding an electrical conductor with a contact element
Procédé de soudage d'un conducteur électrique avec un élément de contact

(43) Veröffentlichungstag der Anmeldung: 26.06.2013
(73) Patentinhaber: Nexans, 75008 Paris (FR)
(72) Erfinder: Riedel, Richard, 92685 Floß (DE)
(74) Vertreter: Döring, Roger

(56) Entgegenhaltungen:
- EP-A1- 2 001 085
- JP-A- 9 082 374
- JP-A- 2006 092 993
- JP-A- 2008 262 787
- US-A- 3 211 829
- US-A1- 2007 119 838

## Beschreibung

Die Erfindung bezieht sich auf ein Verfahren zum Verschweißen von mindestens zwei isolierten, flexiblen elektrischen Leitern mit jeweils einem starren Kontaktelement aus Metall gemäß dem Oberbegriff des Patentanspruchs 1 (siehe, z.B., EP 2 001 085 A).

Beispielsweise im Motorraum von Kraftfahrzeugen, insbesondere von Fahrzeugen mit elektrischem Antrieb oder mit einem Hybridantrieb, gibt es eine zunehmende Anzahl von an unterschiedlichen Geräten angebrachten Kontaktelementen, an welche elektrische Leiter angeschlossen werden müssen, und zwar nach Möglichkeit unter Einsatz von Robotern. Die Kontaktelemente sind starre Flachteile aus Metall mit etwa rechteckigem Querschnitt, die von außen zugänglich aus den Gehäusen der Geräte herausragen, wie beispielsweise aus einem Elektromotor oder aus einem Magnetschalter. Bei den an die Kontaktelemente anzuschließenden elektrischen Leitern handelt es sich nahezu ausschließlich um flexible isolierte Litzenleiter. Sie werden zum Verschweißen mit den Kontaktelementen an ihren Enden abisoliert und so verdichtet, daß sie eine kompakte Einheit bilden. Danach werden die Enden der Leiter in bekannter Technik im isolierten Bereich in Ausnehmungen von Kunststoffkörpern eingeklemmt, die in unmittelbarer Nähe der Kontaktelemente an den Gehäusen der jeweiligen Geräte angebracht sind. Die blanken, verdichteten Enden der Leiterenden werden dann an die Kontaktelemente angelegt und mit denselben verschweißt. Dabei kann es leicht geschehen, daß die Leiter aus einer vorgegebenen Lage herausrutschen, so daß keine brauchbare Schweißverbindung entsteht. Je größer die Anzahl der Kontaktelemente und der anzuschließenden Leiter ist, desto größer kann dementsprechend die Anzahl von fehlerhaften Verbindungen werden.

Der Erfindung liegt die Aufgabe zugrunde, das eingangs geschilderte Verfahren so zu gestalten, daß fehlerhafte Schweißverbindungen weitestgehend ausgeschlossen werden können.

Diese Aufgabe wird entsprechend den kennzeichnenden Merkmalen des Patentanspruchs (siehe, z.B., EP 2 001 085 A) gelöst.

Mit diesem Verfahren wird zunächst an den abisolierten Enden der Leiter jeweils der Verbinder elektrisch leitend festgelegt, so daß bei einem Litzenleiter eine Kompaktierung desselben nicht erforderlich ist. Jeder Verbinder wird danach unter Ausnutzung des ohnehin vorhandenen Kunststoffkörpers mittels seines Hakens in einem Schlitz des Kunststoffkörpers positionsgerecht und unverrückbar festgelegt. Die Verbinder liegen dann in vorgegebener Position an dem jeweiligen Kontaktelement an, so daß ein Verbinder und ein Kontaktelement abschließend mit beispielsweise zwei Schweißelektroden sicher verschweißt werden können. Fehlerhafte Schweißverbindungen können ausgeschlossen werden.

Das Verfahren nach der Erfindung wird anhand der Zeichnungen als Ausführungsbeispiel erläutert, und zwar nur für eine Verbindungsstelle zwischen einem elektrischen Leiter und einem Kontaktelement. Es gilt analog dazu für alle möglichen Verbindungsstellen zwischen Leitern und Kontaktelementen eines Geräts.

Es zeigen:
Fig. 1 das Ende eines isolierten elektrischen Leiters.
Fig. 2 und 3 zwei unterschiedliche Ansichten eines elektrischen Kontaktelements.
Fig. 4 einen am Ende eines Leiters angebrachten Verbinder in schematischer Darstellung.
Fig. 5 eine Draufsicht auf ein Kontaktelement mit neben demselben angebrachtem Kunststoffkörper ebenfalls in schematischer Darstellung.
Fig. 6 eine Seitenansicht des Kunststoffkörpers nach Fig. 5.
Fig. 7 eine Verbindungsstelle zwischen einem Verbinder und einem Kontaktelement.

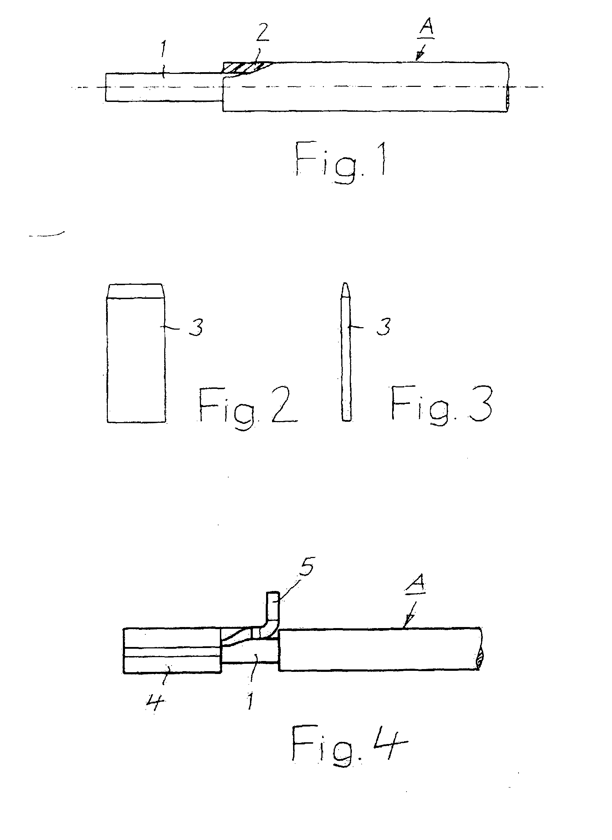

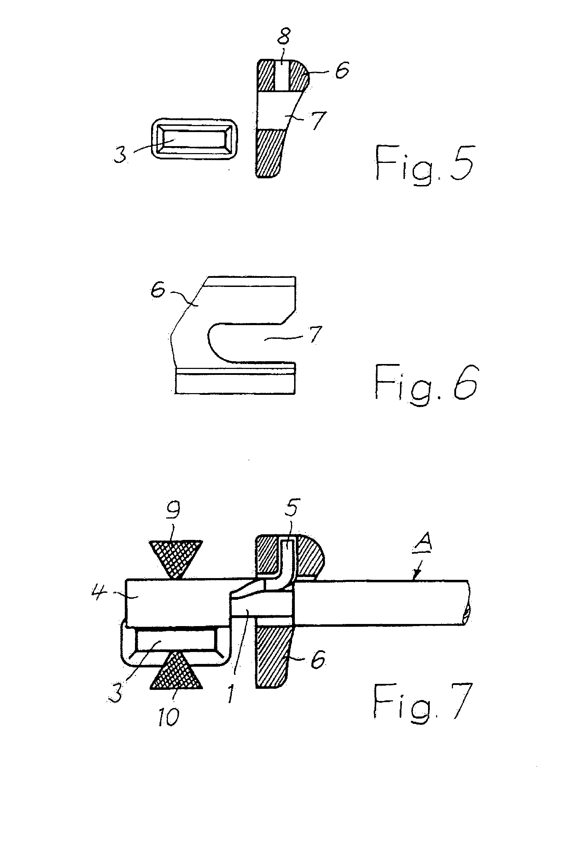

In den Fig. 1 bis 3 sind die Teile schematisch dargestellt, die mit dem Verfahren nach der Erfindung bearbeitet und miteinander verbunden werden sollen. Es wird dazu ein in den Fig. 4 und 7 dargestellter Verbinder eingesetzt, der einen Crimpbereich zum Festlegen an einem elektrischen Leiter und einen seitwärts abstehenden Haken zu seiner Positionierung relativ zu einem Kontaktelement aufweist.

Eine in Fig. 1 dargestellte Ader A hat einen flexiblen elektrischer Leiter 1, der von einer Isolierung 2 umgeben ist. Der Leiter 1 besteht mit Vorteil aus Kupfer und ist als Litzenleiter ausgeführt. Am Ende der Ader A ist der Leiter 1 durch Entfernen der Isolierung 2 für Kontaktierungszwecke freigelegt. Ein Kontaktelement 3, mit dem der Leiter 1 durch Schweißen verbunden werden soll, ist gemäß den Fig. 2 und 3 ein flaches Bauteil aus Metall mit einem rechteckigen Querschnitt. Ein solches Kontaktelement gehört zu einem elektrischen Gerät und ragt aus einem Gehäuse desselben heraus. Ein Verbinder 4 aus elektrisch leitendem Material ist entsprechend Fig. 4 an den Leiter 1 angeschlossen. Er soll mit dem Kontaktelement 3 verbunden werden und hat für seine Positionierung einen seitwärts unter einem Winkel von 90° bzw. etwa 90° abstehenden Haken 5.

Das Kontaktelement 3 gehört - wie bereits erwähnt - zu einem elektrischen Gerät, wie beispielsweise einem Elektromotor oder einem Magnetschalter, die beide in einem Kraftfahrzeug angeordnet sein können. Ein solches Gerät hat mindestens zwei Kontaktelemente, die von einem Gehäuse des Geräts nach außen abstehen. Es sind in der Regel aber mehr bzw. wesentlich mehr als zwei Kontaktelemente.

In Fig. 5 ist eine Draufsicht auf ein Kontaktelement 3 dargestellt, neben dem ein im Schnitt wiedergegebener Kunststoffkörper 6 angeordnet ist. Der Kunststoffkörper 6 besteht beispielsweise aus Polyamid. Er ist fest auf der Oberfläche des Gehäuses eines Geräts angebracht, aus dem das Kontaktelement 3 herausragt. Das Gehäuse ist der Einfachheit halber nicht mit dargestellt. Der Kunststoffkörper 6 hat eine durchgehende Ausnehmung 7 zur Aufnahme der Ader A in ihrem isolierten Bereich. Die Ausnehmung 7 ist so dimensioniert, daß die Ader A in Montageposition in derselben durch Klemmung gehalten ist. Die Ader A kann dazu in die nach außen offene Ausnehmung 7 (Fig. 6) eingedrückt werden. Der Kunststoffkörper 6 hat außerdem einen Schlitz 8 zur Aufnahme des am Verbinder 4 angebrachten Hakens 5.

Das Verfahren nach der Erfindung wird beispielsweise wie folgt durchgeführt:
Das Ende der Ader A wird zunächst abisoliert, so daß der Leiter 1 frei liegt (Fig. 1). An dem blanken Leiter 1 wird dann das Kontaktelement 4 beispielsweise durch Crimpen befestigt (Fig. 4). Die so bestückte Ader A wird anschließend in die Ausnehmung 7 des Kunststoffkörpers 6 gedrückt. Dabei wird gleichzeitig der Haken 5 in den Schlitz 8 des Kunststoffkörpers 6 eingedrückt, in welchem er in seiner Endposition durch Klemmung unverrückbar gehalten ist. In dieser Endposition liegt der Verbinder 4 an der Oberfläche des Kontaktelements 3 an, und zwar in einer durch das Zusammenwirken von Kunststoffkörper 6 und Haken 5 definierten Lage. Kontaktelement 3 und Verbinder 4 können dann beispielsweise mittels zweier Schweißelektroden 9 und 10 (Fig. 7) sicher miteinander verschweißt werden.

## Patentansprüche

1. Verfahren zum Verschweißen von mindestens zwei isolierten, flexiblen elektrischen Leitern (1) mit jeweils einem starren Kontaktelement (3) aus Metall, das einen etwa rechteckigen Querschnitt hat und außen an einem Gehäuse eines elektrischen Geräts, von demselben abstehend, angebracht ist, mit welchem die Leiter (1) in ihrem isolierten Bereich jeweils in eine Ausnehmung eines an dem Gerät in unmittelbarer Nähe eines Kontaktelements (3) angebrachten Kunststoffkörpers (6) eingebracht und in derselben durch Klemmung gehalten werden, **gekennzeichnet durch** die Verwendung von Verbinden (4) aus elektrisch leitendem Material, die ein zum elektrisch leitenden Verbinden mit den abisolierten Enden der Leiter (1) geeignetes Klemmteil und einen von demselben unter einem Winkel von 90° bzw. etwa 90° abstehenden Haken (5) haben, mit welchem
- die Verbinder (4) zunächst mit ihrem Klemmteil jeweils elektrisch leitend am Ende eines abisolierten Leiters (1) befestigt werden,
- die Haken (5) danach jeweils in einen in den Kunststoffkörpern (6) angebrachten Schlitz (8) eingesteckt werden, in welchem sie unverrückbar in einer Position gehalten werden, in welcher das zugehörige Klemmteil an der Oberfläche eines Kontaktelements (3) anliegt, und
- die Klemmteile abschließend jeweils mit einem Kontaktelement (3) verschweißt werden.

## Claims

1. Method for welding of at least two insulated electrical conductors (1) to a rigid contact element (3) of metal each, which has a rectangular cross section and protrudes from the housing of an electrical device, by which the conductors with their insulated areas are clamped into a recess of a plastic body (6) which is fixed to the housing in the neighbourhood of the contact element (3) respectively, **characterized by** the use of a connector element (4) of an electrically conductive material, which has a clamping element for the electrically conductive connection to the bared end of the conductor and a hook (5) which protrudes from the same with an angle of 90° or about 90°, wherein
- the connector element (4) at first is connected to the bared end of the conductor (1) by its clamping element,
- the hook (5) thereafter is inserted into a slot (8) of the plastic body (6), within which it is fastened immovable in a position, in which the clamping element abuts to the surface of the contact element (3), and
- the clamping element finally is welded to the contact element (3).

## Revendications

1. Procédé de soudage d'au moins deux conducteurs (1) électriques flexibles isolés avec un élément de contact (3) métallique rigide respectif qui présente une section transversale approximativement rectangulaire et est placé à l'extérieur sur un boîtier d'un appareil électrique, de manière à faire saillie à partir de celui-ci, à l'aide duquel les conducteurs (1) sont, dans leur région isolée, insérés respectivement dans un évidement d'un corps en plastique (6) placé sur l'appareil à proximité immédiate d'un élément de contact (3) et sont maintenus dans cet évidement par serrage, **caractérisé par** l'utilisation de raccords (4) en matériau électriquement conducteur, qui ont une partie de serrage appropriée pour la connexion électriquement conductrice aux extrémités dénudées des conducteurs (1) et un crochet (5) faisant saillie à partir de celle-ci suivant un angle de 90° ou d'approximativement 90°, à l'aide duquel
- les raccords (4) sont tout d'abord fixés, par leur partie de serrage, respectivement de manière électriquement conductrice à l'extrémité d'un conducteur dénudé (1),
- les crochets (5) sont ensuite enfichés respectivement dans une fente (8) placée dans les corps en plastique (6), dans laquelle fente ils sont maintenus de manière inamovible dans une position dans laquelle la partie de serrage associée s'applique contre la surface d'un élément de contact (3), et
- les parties de serrage sont ensuite respectivement soudées avec un élément de contact (3).
